# DEMANDE DE BREVET EUROPEEN

(11) **EP 2 738 693 A1**
(43) Date de publication de la demande: **04.06.2014**
(21) Numéro de dépôt: 13194688.1
(22) Date de dépôt: 27.11.2013
(51) Int. Cl.: G06F 17/30

(54) **Procédé d'enregistrement de données hiérarchisées**

(30) Priorité: 03.12.2012 FR 1261544
(71) Demandeur: BULL SAS, 78340 Les Clayes sous Bois (FR)
(72) Inventeur: Ficet, Aline, 91350 Grigny (FR)
(74) Mandataire: Camus, Olivier Jean-Claude

(57) **Abrégé**

Procédé d'enregistrement de données hiérarchisées, dans un système de stockage de données comportant au moins une entité de stockage caractérisé en ce qu'il comporte les étapes suivantes :
- Analyse sémantique d'une commande saisie par un utilisateur pour déterminer une liste d'entités de stockage potentiellement concernée par l'enregistrement,
- Analyse d'un schéma descriptif de la structure des entités de stockage pour compléter la liste d'entités de stockage,
- Production et enregistrement dans une mémoire d'un modèle de saisie de données selon un formalisme JSON,
- Edition, par un utilisateur, du modèle de saisie,

Interprétation du modèle de saisie édité pour mettre à jour le système de stockage de données.

## Description

### DOMAINE TECHNIQUE DE L'INVENTION

L'invention se rapporte à l'enregistrement de données dans un système de stockage de données. Plus particulièrement l'invention se rapporte à l'enregistrement de données hiérarchisées dans un système de stockage de données.

On entendra par hiérarchisés, dans le cadre de la présente description, le fait qu'il puisse exister des liens, ou relations, entre des objets enregistrés dans un système de stockage de données. Sont en particulier visés les systèmes de stockage dits relationnels. Sont également visés les systèmes de stockage dits hiérarchiques.

### ETAT DE LA TECHNIQUE ANTERIEURE

Dans l'état de la technique il est fréquent de devoir insérer ou mettre à jour des données dans un système de stockage de données souvent appelé système de gestion de base de données ou, de manière elliptique, base de données. Une base de données est, par exemple :
- Une base de données relationnelle,
- Une base de données décisionnelle,
- Une base de données objet,
- Une base de données NoSQL,
- ...

Les systèmes de stockages sont nombreux. Une base de données, ou plus spécifiquement un système de gestion de base de données, est essentiellement un moyen de rendre des données persistantes dans le temps.

Chaque système de stockage permet de stocker les mêmes données mais en utilisant des interfaces différentes. Ces interfaces sont :
- Des interfaces de programmation aussi appelées API, chaque système de stockage ayant sont API. Une API est, de manière simplifiée, un ensemble, ou librairie, de fonctions permettant d'effectuer des opérations de base : création, lecture, mise à jour et destruction de données. On parle d'interface de bas niveau dont l'utilisation requiert la connaissance d'un langage de programmation permettant la mise en oeuvre des fonctions de l'API. L'API permet de gérer les communications avec le système de stockage de données et l'interprétation de commandes de manipulation de données ou de commandes de description de données. De telles API sont, par exemple :
   - Libpq : librairie C pour les communications avec un système de base de données PostgreSQL,
   - System. Data : librairie C# pour, entre autre, les communications avec un système de base de données Microsoft SQL Server via le sous ensemble SqlClient.
   - ...
   L'interface d'utilisation d'une telle API est un environnement de programmation requérant la connaissance d'au moins un langage de programmation. Une telle interface est adaptée pour un développeur.

- Des logiciels de gestion des systèmes de stockage qui offrent une interface de plus haut niveau permettant de faire abstraction de l'API. A ce niveau il suffit de connaître le langage de manipulation de données et/ou le langage de description de données pour pouvoir accéder aux données stockées dans le système de stockage. De tels logiciels de gestion sont, par exemple :
   - Toad (Dell),
   - Sql Server Managment Studio (Microsoft),
   - SQL Developer (Oracle),
   - ...
   L'interface d'utilisation d'un tel logiciel est un éditeur de texte doté d'une coloration syntaxique adaptée au langage de manipulation de données. Une telle interface est adaptée pour un administrateur de base de données ou un développeur.
- Des logiciels d'insertion via un fichier plat, chaque ligne du fichier plat correspondant à une ligne dans une table (entité de stockage) du système de stockage cible. Une telle interface est adaptée pour un administrateur de base de données, un développeur ou un utilisateur éclairé.
- Des logiciels personnalisés proposant une interface faisant abstraction de l'API, du langage de manipulation de données et du langage de description de données. De tels logiciels sont légion et développés à la demande. Leur qualité dépend du cycle de développement qui lui-même conditionne leur coût. De tels logiciels sont donc issus d'un processus de développement incluant une étape de spécification figeant un besoin exprimé au moment de la rédaction des spécifications. De tels logiciels proposent une interface graphique permettant de plus ou moins bien appréhender la structure des données et de les manipuler. De tels logiciels guident les utilisateurs et les empêchent de commettre des erreurs en encadrant et limitant les opérations réalisables. Une telle interface est destinée aux utilisateurs dit finaux qui n'ont que faire du système de stockage sous-jacent à l'application qu'ils utilisent.

Les solutions de l'état de la technique sont particulièrement inadaptées, pour des utilisateurs non développeur ou pressés, par exemple, dans les contextes suivant :
- Evolution du schéma de base de données : cela disqualifie, en particulier, les logiciels personnalisés ;
- Changement du système de stockage : cela peut perturber même un développeur ou un administrateur de base de données ;
- Mise à disposition d'un système de stockage sans interface spécifique : Un tel cas est celui, par exemple, où l'on historise de l'information sur des phénomènes physiques en vue d'un diagnostic a posteriori. Un problème, ou incident, n'étant pas connu a priori, on s'assure juste que l'on aura à disposition le maximum d'informations pour le résoudre, sans savoir quelles seront les informations spécifiquement pertinentes pour le résoudre.
- Déploiement rapide d'un système de stockage.
- ...

Dans au moins ces cas, il n'existe pas de solution permettant à n'importe quel utilisateur intéressé par les données d'un système de stockage de données, d'enregistrer, de manière personnalisée et/ou intuitive, des objets dans le système de stockage de données.

Dans cette description le terme objet est utilisé pour désigner une instance de classe d'objet. Une classe est parfois assimilée à un type. On rappelle, pour mémoire ce qu'est une instanciation. L'instanciation est l'action d'instancier, de créer un objet à partir d'un modèle, la classe. Elle est réalisée par la composition de deux opérations : l'allocation et l'initialisation. L'allocation consiste à réserver un espace mémoire au nouvel objet. L'initialisation consiste à fixer l'état du nouvel objet, c'est à dire à attribuer des valeurs aux propriétés de l'objet, chaque propriété ayant un nom dans un modèle.

### EXPOSE DE L'INVENTION

L'invention vise à remédier à tout ou partie des inconvénients de l'état de la technique identifiés ci-dessus, et notamment à proposer des moyens pour permettre au maximum d'utilisateurs d'insérer un objet dans un système de stockage de données.

Pour ce faire, l'invention propose une démarche en trois étapes :
- Production d'un modèle,
- Edition du modèle,
- Enregistrement du modèle édité dans le système de stockage de données.

De manière à s'adapter facilement au maximum d'environnements de travail, le modèle de saisie obéit à un formalisme JSON simplifié. Le formalisme JSON est décrit par la RFC 4627 publiée en juillet 2006 par l'IETF. La simplification est double :
- Dans le formalisme utilisé par l'invention le seul type scalaire utilisé est la chaîne de caractère. Elle est de plus intelligible par l'homme, notamment pour les éventuelles dates.
- La chaîne de caractères JSON est formatée pour être facilement lue par un être humain via un éditeur de texte.

Ce formalisme permet à un utilisateur éditant le modèle de facilement appréhender la structure des données et donc de l'éditer.

Dans ce dessein, un aspect de l'invention se rapporte à un procédé d'enregistrement de données hiérarchisées, dans un système de stockage de données comportant au moins une entité de stockage caractérisé en ce qu'il comporte les étapes suivantes :
- Analyse sémantique d'une commande saisie par un utilisateur pour déterminer une liste d'entités de stockage potentiellement concernée par l'enregistrement,
- Analyse d'un schéma descriptif de la structure des entités de stockage pour compléter la liste d'entités de stockage,
- Production et enregistrement dans une mémoire d'un modèle de saisie de données selon un formalisme JSON,
- Edition, par un utilisateur, du modèle de saisie,
- Interprétation du modèle de saisie édité pour mettre à jour le système de stockage de données.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- L'analyse sémantique est réalisée en utilisant un fichier de configuration qui associe des mots clés à des identifiants d'éléments du schéma descriptif de la structure de stockage.
- Lors de l'étape de production, les clés des paires [clé, valeur] du modèle de saisie sont produites à partir du schéma descriptif de la structure des entités de stockage et/ou à partir d'un fichier de configuration.
- Le seul type primitif JSON utilisé est la chaîne de caractère.
- Lors de l'enregistrement du modèle de saisie, chaque objet JSON commence sur une nouvelle ligne, chaque nouvelle ligne étant indentée d'une quantité dépendant d'une profondeur de l'objet JSON dans la hiérarchie d'objets JSON de la chaîne JSON.
- Procédé d'enregistrement selon l'une des revendications précédentes, caractérisé en ce que, lors de l'enregistrement du modèle de saisie, chaque propriété d'un objet JSON commence sur une nouvelle ligne, chaque nouvelle ligne étant indentée d'une quantité dépendant d'une profondeur de l'objet JSON dans la hiérarchie d'objets JSON de la chaîne JSON.
- Lors de l'interprétation du modèle saisie édité :
- Une accolade ouvrante est interprétée comme une instruction de création,
- Une valeur, d'une paire [clé, valeur] JSON, est soit une valeur d'une propriété, soit une désignation d'un objet existant du système de stockage.
L'invention se rapporte également à un dispositif de stockage numérique stockant un programme exécutable par une machine et composé d'instructions réalisant le procédé selon l'une des caractéristiques précédentes.

### BREVE DESCRIPTION DES FIGURES

D'autres caractéristiques et avantages de l'invention ressortiront à la lecture de la description qui suit, en référence aux figures annexées, qui illustrent :
- la figure 1, une illustration d'une architecture permettant la mise en oeuvre du procédé selon l'invention ;
- la figure 2, une illustration d'étapes du procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

Dans l'exemple de mise en oeuvre décrit on considère comme système de stockage une base de données relationnelle. Dans l'exemple, la base de données permet de stocker des informations sur des salles. Ces informations sont réparties dans trois entités de stockage. Dans le cas de la base de données relationnelle, une entité de stockage est une table. Chaque table comporte des colonnes. Chaque colonne a un type et zéro, une ou plusieurs contraintes. L'ensemble des informations sur les tables et leurs colonnes constitue le schéma de la base de données.

Dans la base de données exemple on trouve les tables nommées :
- Rooms, ayant les colonnes suivantes :
   - Id, ayant la contrainte suivante :
      - Clé primaire
   - Name, ayant les contraintes suivantes :
      - Obligatoire
      - Unique,
   - City_id, ayant les contraintes suivantes :
      - Obligatoire,
      - Clé étrangère vers la table nommée Cities
- Cities, ayant les colonnes suivantes :
   - Id, ayant la contrainte suivante :
      - Clé primaire,
   - Name, ayant les contraintes suivantes :
      - Obligatoire,
      - Unique,
   - Country_id, ayant les contraintes suivantes :
      - Obligatoire,
      - Clé étrangère vers la table nommée Countries,
- Countries, ayant les colonnes suivantes :
   - Id, ayant la contrainte suivante :
      - Clé primaire
   - Name, ayant les contraintes suivantes :
      - Obligatoire,
      - Unique.

Ainsi structurée, la base de données d'illustration permet de stocker des objets de type salle. Chaque objet salle a un nom et fait référence à un objet de type ville. Chaque objet de type ville a un nom et fait référence à un objet de type pays. Chaque type d'objet correspond à une table, ou entité de stockage, de la base de données. D'après le schéma de description :
- un pays comporte aucune, une ou plusieurs villes,
- une ville comporte aucune, une ou plusieurs salles.
Dans le domaine on parle d'une cardinalité [0..N].

Les objets sont dits hiérarchisés. On dit aussi qu'ils sont imbriqués.

Le système de base de données est mis en oeuvre par un ordinateur. Le procédé selon l'invention est mis en oeuvre par un ordinateur. Ces mises en oeuvres sont réalisées via une implémentation sur un media de stockage non transitoire de codes instructions dont l'interprétation par un microprocesseur de l'ordinateur provoque la réalisation d'étapes dont celles de l'invention.

D'une manière générale, lorsque l'on prête une action à un appareil, ordinateur ou autre, celle-ci est réalisée par un microprocesseur de l'appareil commandé par des codes instructions enregistrés dans une mémoire de l'appareil. Le microprocesseur, exécutant des codes instructions, manipule des variables enregistrées en mémoire.

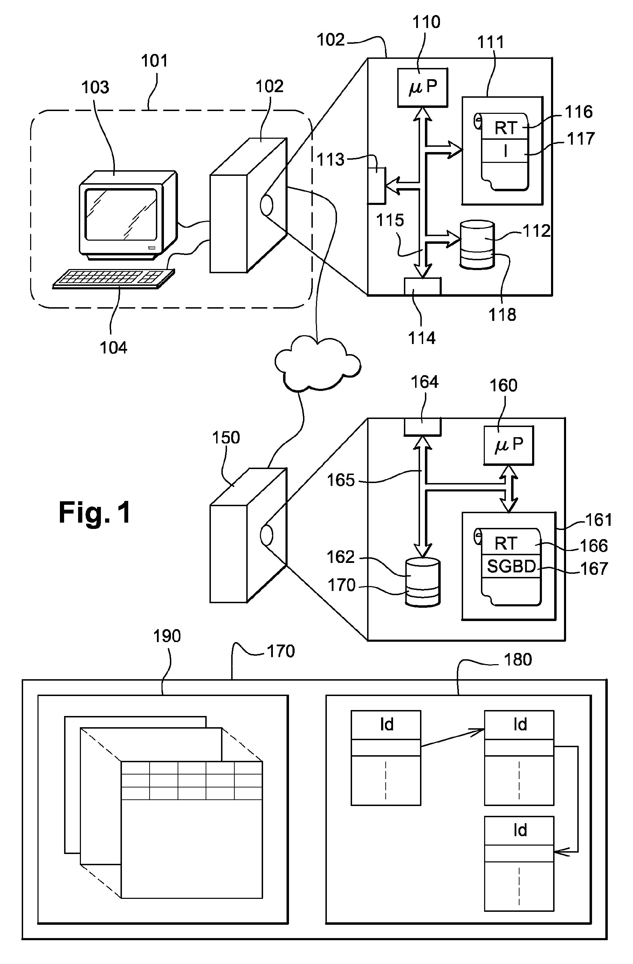

La figure 1 montre un exemple d'architecture matérielle supportant la mise en oeuvre de l'invention. La figure 1 montre un ordinateur 101 composé au moins d'une unité 102 centrale, d'un écran 103, d'un clavier 104. La figure 1 montre que l'unité centrale comporte au moins :
- Un premier microprocesseur 110,
- Une première mémoire 111 de programme,
- Une première mémoire 112 de stockage,
- Des connecteurs 113 de périphérique, par exemple pour connecter le clavier 104 et l'écran 103,
- Une première interface 105 réseau permettant ce connecter l'ordinateur 102 à un réseau local et étendu.

Le premier microprocesseur 110, la première mémoire 111 de programme, la première mémoire 112 de stockage, les connecteurs 113 et la première interface 114 réseau sont interconnectés par un bus 115.

La figure 1 montre que la première mémoire 111 de programme de l'ordinateur 102 comporte au moins deux zones de codes instructions :
- Une première zone 116 correspond aux codes instructions du système d'exploitation et des librairies standards kit de composants inclus,
- Une deuxième zone 117 correspond aux codes instructions du procédé selon l'invention.

La figure 1 montre que l'ordinateur 102 est connecté à un serveur 150 de base de données. Les machines ordinateur 102 et serveur 150 sont désignées par des noms différents, ordinateur et serveur, pour la clarté de l'exposé. Dans la pratique, elles ont des architectures fonctionnellement équivalentes.

Le serveur 150 comporte au moins :
- Un deuxième microprocesseur 160,
- Une deuxième mémoire 161 de programmes,
- Une deuxième mémoire 162 de stockage,
- Une deuxième interface 164 réseau.

Le deuxième microprocesseur 160, la deuxième mémoire 161 de programmes, la deuxième mémoire 162 de stockage et la deuxième interface 164 réseau sont interconnectés via un deuxième bus 165.

La figure 1 montre que la deuxième mémoire 161 de programme du serveur 160 comporte au moins deux zones de codes instructions :
- Une première zone 166 correspond aux codes instructions du système d'exploitation et des librairies standards kit de composants inclus,
- Une deuxième zone 167 correspond aux codes instructions d'un moteur de base de données.

La figure 1 montre que la deuxième mémoire 162 de stockage comporte une première zone 170 de stockage d'une base de données. La zone 170 de stockage d'une base de données est fonctionnellement structurée en plusieurs zones dont au moins :
- Une zone 180 de stockage de schéma qui stocke une description des données et entités de stockage ;
- Une zone 190 de stockage des entités de stockage.

La zone de stockage 170 correspond en général à un ou plusieurs fichiers sur une mémoire de stockage, ici la deuxième mémoire 162 de stockage. Dans le langage usuel chaque zone 170 de stockage correspond à une base de données et a un nom pour le serveur de base de données. Le fait de se connecter à une base de données BDD revient alors à établir une connexion réseau vers le serveur 150 pour obtenir des données correspondant à la zone de la deuxième mémoire de stockage 162 associée à l'identifiant BDD. Tout cela est géré, de manière connue, par les codes instructions de la deuxième zone 167 de la deuxième mémoire de programme 161. Ces codes instructions correspondent à un moteur de base de données, par exemple :
- PostgreSQL,
- Sql Server,
- MySQL,
- Oracle.

Pour cette description, on considère que les entités de stockage sont des tables. On note que souvent les informations de schéma sont enregistrées dans des entités de stockage. Pour la description, on confond entité de stockage et table.

Une table comporte plusieurs colonnes, chaque colonne pouvant stocker une valeur. Une ligne d'une table est une liste de valeurs, une pour chaque colonne de la table. Un objet d'une base de données est un ensemble d'une ou plusieurs lignes d'une ou plusieurs tables selon le schéma de la base de données.

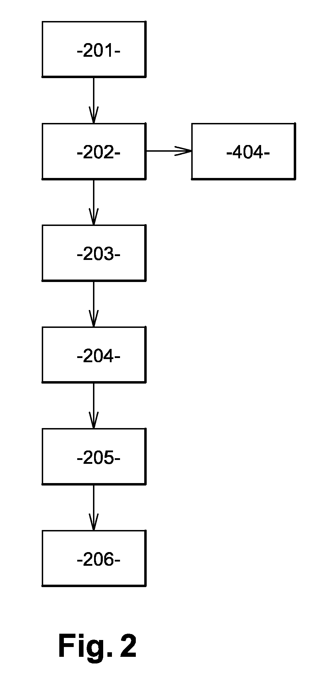

La figure 2 montre une étape 201 préliminaire de saisie d'une ligne de commande. Cette saisie est réalisée par un utilisateur, par exemple, à l'aide d'un clavier. La ligne de commande saisie est, par exemple, de la forme :
commande verbe quantité identifiant

Dans cette variante, la ligne de commande est saisie dans une fenêtre de texte appelée une invite de commande, ou fenêtre console. Dans cette variante les termes de la ligne de commande ont les significations suivantes :
- Commande : le nom du fichier exécutable qui va être invoqué par le système d'exploitation. Ici il s'agit du fichier exécutable correspondant à la mise en oeuvre de l'invention ;
- Verbe : l'action à effectuer ;
- Quantité : un nombre facultatif, sa présence est, par exemple, déduite du nombre de termes dans la commande texte.
- Identifiant : un identifiant d'un objet

Une fois la ligne de commande saisie elle est validée pour initier la mise en oeuvre de l'invention. On dit aussi lancer un programme.

Dans cette variante, le périphérique de saisie utilisé pour initier la mise en oeuvre de l'invention est principalement un clavier. Dans une autre variante plus graphique, l'étape 201 est réalisée via une interface graphique ayant pour but de dispenser d'utiliser le clavier. Une telle interface est, par exemple, composée par quatre listes déroulantes, une pour chaque terme de la commande et d'un bouton. Chaque liste déroulante propose alors des valeurs possibles pour les termes de la ligne de commande. Une valeur est sélectionnée à l'aide d'un dispositif de pointage. Une fois que chaque liste déroulante affiche la valeur souhaitée, l'activation du bouton via le dispositif de pointage initie la mise en oeuvre de l'invention. Dans encore une autre variante, l'invention est réalisée sous forme d'un service internet (Web Service). Dans ce cas, l'initiation de l'invention se fait via l'activation d'une URL comportant des paramètres correspondant aux termes de la ligne de commande précédemment décrite.

La ligne de commande de lancement peut comporter d'autres termes. De même, dans une variante dans laquelle il n'y aurait qu'un seul verbe possible le saisir deviendrait inutile. Considérons la ligne de commande suivante :
invention.exe insérer 1 salle.

L'étape 201 initiale est suivie d'une étape 202 d'analyse sémantique de la ligne de commande. Dans cette étape la commande, représentée en mémoire par une chaîne de caractères, est découpée pour en isoler les termes. Le découpage se fait de façon standard par le « runtime ». Le « runtime » est la portion des codes instructions d'un programme non écrite par l'auteur du programme mais liée au programme au moment de sa création. Pour mémoire, on rappelle que ce lien est historiquement statique ou de plus en plus souvent dynamique via des références à des kits de composants logiciels ou « framework ». Une partie de ce « runtime » est exécutée préalablement à tout code écrit par l'auteur du programme. Le découpage de la ligne de commande en termes, alors appelés arguments, en fait partie.

Le premier terme est la commande qui ne présente pas d'intérêt ici. Le second terme est le verbe, ici il vaut « insérer ». Le troisième terme vaut « 1 ». Le quatrième terme vaut « salle ».

Du fait de l'ordre des termes l'ordinateur 102 mettant en oeuvre le procédé sait que l'utilisateur souhaite insérer une nouvelle salle dans la base de données.

Dans une variante de l'invention on peut utiliser des arguments nommés. Cela donnerait, par exemple, une ligne de commande du type :
- Invention.exe action=insérer qty=1 object=salle
- Inventon.exe -action insérer -qty 1 -object salle
- ...

Une telle variante permet d'être moins stricte sur l'ordre des arguments mais est plus verbeuse.

A ce stade l'ordinateur 102 connaît la valeur des arguments de la ligne de commande associés au verbe, quantité et identifiant. Pour poursuivre l'analyse sémantique l'ordinateur 102 utilise la valeur de l'identifiant pour déterminer une entité de stockage de la base de données. Cela est réalisé par exemple en parcourant un fichier de configuration 118 de la première mémoire de stockage 112 qui permet d'associer des mots. Un tel fichier comporte une liste d'association. Une association est une chaîne de caractère de type :
Mot1 séparateur Mot2

Séparateur est, par exemple le symbole =. Dans notre exemple, on aurait alors, au moins dans cette liste :
salle=Rooms,
room=Rooms,
sala=Rooms

La détermination d'une entité de stockage se fait alors en recherchant dans les valeurs de Mot1 la valeur de l'identifiant. L'entité correspondante est alors Mot2. L'exemple ci-dessus illustre qu'il est possible de rendre plusieurs langues utilisables.

Dans une variante, on force la casse de la valeur de l'identifiant avant la recherche. C'est-à-dire si l'identifiant vaut SALLE, Salle, SallE,... on recherche salle.

Dans une variante de l'invention on recherche des formes dérivées, c'est-à-dire des pluriels, singuliers, masculins, féminins...

Dans une variante, de l'invention on recherche via une traduction phonétique.

La même analyse est pratique sur la valeur du verbe :
- Via le même fichier de configuration,
- Avec les mêmes associations,
- Avec des associations préfixées par un code :
   - verb.Mot1=Mot2
   - id.Mot3=Mot4
   - ...
- Via le même fichier de configuration mais une autre partie, dans ce cas les parties sont identifiées, par exemple, par des titres de section [section identifiants], [section verbes]. Il s'agit alors d'un fichier de configuration de type .ini. D'autres formats de fichiers de configuration sont possibles, parmi lesquels, base de registre, .config. La liste n'est pas exhaustive.

A la fin de l'étape 202 l'ordinateur 102 a donc pu déterminer au moins une valeur pour le verbe, insert, et une valeur pour l'identifiant, Rooms. Si ce n'est pas le cas, par exemple pour la ligne de commande
Invention.exe insérer 1 hotel
L'ordinateur 102 n'arrive pas à déterminer une table, alors il passe à une étape 404 d'erreur dans laquelle il affiche un message d'erreur. Dans les cas contraire, l'ordinateur passe à une étape 203 d'analyse du schéma descriptif de la base de données.

On rappel ici que, pour un programme, se connecter à une base de données est classique. Cela se fait via la connaissance d'une chaîne de connexion qui comporte toutes les informations utiles à la connexion. Dans l'invention, cette chaîne est, par exemple, enregistrée dans un fichier de configuration lié à l'application, à l'utilisateur.... Il s'agit par exemple du fichier de configuration précédemment cité.

Dans l'étape 203 d'analyse du schéma l'ordinateur 102 se connecte au serveur 150 pour interroger le schéma descriptif 180 de la base de données correspondant à la première zone de stockage 170 de la deuxième mémoire de stockage 162.

L'ordinateur 102 demande une description de la table nommée Rooms. En réponse l'ordinateur obtient :
- Rooms, ayant les colonnes suivantes :
   - Id, ayant la contrainte suivante :
      - Clé primaire
   - Name, ayant les contraintes suivantes :
      - Obligatoire
      - Unique,
   - City_id, ayant les contraintes suivantes :
      - Obligatoire,
      - Clé étrangère vers la table nommée Cities.

Il ajoute cette description à une liste de description vide au début de l'étape 203 d'analyse du schéma. Parmi ces informations obtenues, l'ordinateur 102 recherche les clés étrangères pour savoir si d'autres tables sont intéressantes. C'est le cas ici. Si un paramètre de la ligne de commande l'impose, alors, pour chaque clé étrangère correspondant à une table dont il n'a pas déjà demandé la description, l'ordinateur 102 demande la description de la table visée par la clé étrangère. L'ordinateur 102 demande donc la description de la table nommée Cities et obtient en réponse :
- Cities, ayant les colonnes suivantes :
   - Id, ayant la contrainte suivante :
      - Clé primaire,
   - Name, ayant les contraintes suivantes :
      - Obligatoire,
      - Unique,
   - Country_id, ayant les contraintes suivantes :
      - Obligatoire,
      - Clé étrangère vers la table nommée Countries.

L'ordinateur trouve alors une nouvelle clé étrangère visant la table nommée Countries. Il ajoute cette description à la liste de description. Puis demande la description de la table nommée Countries. Il obtient en réponse :
- Countries, ayant les colonnes suivantes :
   - Id, ayant la contrainte suivante :
      - Clé primaire
   - Name, ayant les contraintes suivantes :
      - Obligatoire,
      - Unique.
   Il ajoute cette description à la liste de description. Comme il n'y pas de nouvelle clé étrangère l'interrogation du schéma s'arrête là.

Le principe d'interrogation est donc le suivant :
Ajouter à liste identifiant les identifiants issues de l'analyse sémantique.
Pour chaque identifiant de liste identifiant
   Interroger schéma de base de donné pour identifiant
   Ajouter réponse à liste description
   Pour chaque clé externe de réponse
   Si identifiant visé par clé externe n'est pas dans liste description
   Ajouter identifiant visé à liste identifiant
   Supprimer identifiant de liste identifiant.

A la fin de l'algorithme, qui n'est qu'un exemple, la liste d'identifiant est vide et la liste de description de table est pleine.

De l'étape 203 d'analyse du schéma l'ordinateur 102 passe à une étape 204 de production d'un fichier JSON simplifié. Dans cette étape, l'ordinateur 102 utilise un fichier de configuration, par exemple celui déjà cité, pour réaliser une association entre des noms de tables et de colonnes dans la base de données, et des labels lisibles par un utilisateur. Les labels sont aussi appelés des alias dans la mesure où il s'agit d'un autre nom pour un objet déjà nommé par ailleurs. Par exemple le fichier de configuration comporte les lignes suivantes :
[labels base de données]
Rooms=salle
Rooms.Name=nom
Cities=ville
Cities.Name=nom
Countries=pays
...

La première ligne identifie une section du fichier de configuration utilisé comme étant celle des labels à utiliser pour produire le fichier JSON. Les lignes suivantes associent :
- Un nom de table à un label, ou, si le nom comporte un séparateur, ici le point,
- Un nom d'une colonne d'une table à un label. Le nom de la table précède le séparateur, le nom de la colonne suit le séparateur.

L'étape 204 de production commence par initialiser un flux de sortie, par exemple un fichier de sortie. la première table identifiée par l'identifiant de la ligne de commande. Il applique alors une fonction de traitement de table à cette table. Cette fonction réalise les étapes suivantes :
- Ecrire dans le flux de sortie l'alias de la table entre des marques de citations
- Ecrire dans le flux de sortie le séparateur de nom,
- Ecrire le caractère de début d'objet
- Augmenter de l'indentation de N espaces,
- Pour chaque colonne de la table, dont la description a été récupérée à l'étape 203 d'analyse du schéma :
   - Si la colonne est une clé primaire, ne rien faire,
   - Sinon
      - Si la colonne est une clé étrangère, alors la valeur désigne un objet existant dans la base de données,
         - Rechercher dans le fichier de configuration l'alias de la table référencée par la clé étrangère
         - Ecrire dans le flux de sortie l'indentation, l'alias de la table encadré par des marques de citation, le séparateur de nom
      - Sinon
         - Rechercher dans le fichier de configuration l'alias de la colonne
         - Ecrire dans le flux de sortie l'indentation, l'alias de la colonne encadré par des marques de citation, le séparateur de nom
         - Ecrire dans le flux de sortie une valeur d'invite de saisie encadrée par des marques de citation
         - Ecrire dans le flux de sortie une nouvelle ligne,
         - Si la colonne n'est pas la dernière de la table
            - Ecrire dans le flux de sortie le caractère de séparateur de valeur.
- Ecrire dans le flux de sortie le caractère de fin d'objet.

En générale on a, issue de la RFC 4627:
- Marque de citation : le caractère dont le code ASCII est 34 en base décimale : ",
- Séparateur de nom : le caractère dont le code ASCII est 58 en base décimale : :,
- Début d'objet : le caractère dont le code ASCII est 123 en base décimale : {,
- Fin d'objet : le caractère dont le code ASCII est 125 en base décimale :
   },
- Séparateur de valeur : le caractère dont le code ASCII est 44 en base décimale : ,.
- N espaces, N valant 4. Mais cela n'est qu'une convenance.

Dans le cas de notre exemple on obtient la sortie suivante dans le fichier modèle de saisie.
"salle" : {
"nom" : "nom de la salle",
"ville" : "Paris"
}

Ce fichier modèle de saisie illustre des variantes de l'invention. Ces variantes sont relatives au fait que l'on associe la valeur "Paris" à la clé "ville". Cela peut être obtenu, par exemple, d'au moins de trois façons :
- Une valeur par défaut pour la table Cities, via le fichier de configuration,
- Lors de la détection d'une clé étrangère, l'ordinateur interroge la table visée pour obtenir la première ligne de la table et utilise comme valeur, selon la variante :
   - Une colonne par défaut pour la table visée, ladite colonne étant spécifiée dans le fichier de configuration,
   - La première colonne ayant une contrainte d'unicité et n'étant pas une clé primaire, ou
   - Une colonne au nom normalisé, par exemple Name, porteuse d'une contrainte d'unicité.
- La saisie d'une ligne de commande enrichie comme par exemple :
   - invention.exe insérer 1 salle dans ville=Paris

Dans ce dernier cas, si la ville dont le nom est Paris n'existe pas dans la base de données, alors pour la clé étrangère en question, l'ordinateur 102 traite la table Cities comme la table Rooms. On obtient alors la sortie suivante dans le flux de sortie :
"salle" : {
"nom" : "nom de la salle",
"ville" : {
"nom" : "Paris",
"pays" : "France"
}

Le fichier JSON est, dans les cas illustrés, simplifié. Les valeurs sont systématiquement des chaînes de caractère, les objets imbriqués, ville dans le cas d'une salle, ne sont traduit comme des objets que lorsque cela est pertinent, c'est-à-dire lorsqu'ils doivent être créés.

On considère que les données sont hiérarchisées car l'objet salle fait référence, ou encore comporte, un objet ville. En ce sens l'objet ville est un sous-objet de l'objet salle. Il y a donc une hiérarchie entre les objets. On parle aussi de relation. On remarque que la représentation traditionnelle de tels objets, quand elle est destinée à des humains, est le format XML. Dans l'invention on a choisi un format JSON simplifié car il est moins verbeux et que l'on y distingue plus facilement les valeurs des données des identifiants de données.

A la fin de l'étape de production du modèle de saisie, l'ordinateur 102 le propose, dans une étape 205 d'édition, à l'édition à l'utilisateur. Dans cette étape, l'utilisateur modifie les valeurs associées aux clés puis il enregistre les modifications. Dans la pratique l'enregistrement des modifications se fait dans un fichier, dit ici fichier édité.

Dans une étape 206 d'interprétation du fichier édité, l'ordinateur 102 lit le fichier édité et créé chaque objet qu'il contient. Cette création se fait, en associant à chaque alias un nom de colonne via le fichier de configuration.

Dans le cas de :
"salle" : {
"nom" : "nouvelle salle",
"ville" : "Paris"
}
L'ordinateur 102 détecte, après analyse de la chaîne JSON lue, un objet JSON dont le type, correspondant à un alias de table, est ville. Dans le fichier de configuration il trouve que la table est Cities. L'ordinateur 102 doit donc insérer une ligne dans la table Cities.

Pour chaque propriété de l'objet JSON, l'ordinateur recherche, dans le fichier de configuration, un identifiant de colonne ou de table. Il applique alors le traitement suivant :
- S'il s'agit d'un identifiant de colonne, alors affectation de la valeur à la colonne,
- S'il s'agit d'un identifiant de table alors c'est une clé étrangère et :
   - Recherche dans la table identifiée de la ligne correspondant à la valeur de la propriété JSON,
   - Utilisation de la valeur de clé primaire de la ligne correspondante comme valeur de la clé étrangère.
- S'il s'agit d'un caractère de début d'objet, alors exécution des étapes précédentes pour la valeur de la clé considérée comme un alias de table.
A la fin de l'analyse des propriétés d'un objet JSON, création de la ligne dans la table. Le procédé est ici décrit de manière récursive. Il peut aussi être mis en oeuvre par une boucle classique.

Si, pour le traitement des clés étrangères, l'objet désigné par la valeur de la propriété JSON n'existe pas dans la base de données, alors le procédé selon l'invention affiche une erreur en indiquant quel objet il n'arrive pas à trouver.

L'étape l'enchainement des étapes d'enregistrement de modèle, d'édition, et d'interprétation peut se faire se plusieurs façons :
- Première façon :
   - Le processus principal lance un processus fils d'édition via un éditeur de texte et attend que le processus fils de se termine
   - L'utilisateur édite, sauvegarde et ferme l'éditeur de texte,
   - A la fin du processus fil, le processus principal traite le fichier édité.
- Deuxième façon :
   - Le processus principal lance un processus fils d'édition et se termine.
   - L'utilisateur édite, sauvegarde et ferme l'éditeur de texte,
   - L'utilisateur saisie une ligne de commande qui lance l'interprétation du fichier édité.
- Troisième façon : dans un environnement graphique intégré comportant
   un contrôle d'édition de texte et un bouton pour lancer l'interprétation. La liste n'est pas exhaustive.

L'invention permet de présenter une interface simple et intuitive aux utilisateurs. La complexité des tâches d'enregistrement est masquée par un ou plusieurs fichiers de configuration qui permettent aussi d'abstraire le schéma de la base de données. En effet si le schéma change, les alias peuvent rester identiques. L'utilisateur ne se rend donc pas compte d'un changement de schéma.

Dans une variante de l'invention, en fonction d'un commutateur prédéterminé sur la ligne de commande, à l'étape d'analyse du schéma, l'ordinateur 102 recherche des tables ayant une clé étrangère visant la table identifiée sur la ligne de commande. Ces tables sont alors insérées dans le fichier modèle comme des objets JSON, c'est-à-dire entre des caractères de début et de fin d'objet. Cela signifie, dans l'invention, que les lignes correspondantes dans les tables seront créées durant l'étape d'interprétation du modèle.

Si, sur la ligne de commande, la quantité saisie est différente de 1, par exemple :
invention.exe insérer 2 salle
   Alors l'invention utilise le formalisme JSON propre au tableau pour aboutir au fichier modèle suivant :
   [
   "salle" : {
   "nom" : "nom de la salle",
   "ville" : "Paris"
   },
   "salle" : {
   "nom" : "nom de la salle",
   "ville" : "Paris"
   }
   ]
L'interprétation d'un tel fichier édité conduira à l'enregistrement de 2 salles dans la table nommée Rooms.

Dans l'invention, l'attribution d'une valeur à une colonne lors de l'étape d'interprétation se fait après une analyse formelle du type de la colonne dans la description du schéma. Cela permet d'effectuer des conversions avant l'attribution de la valeur à la colonne. Cela est utile dans les cas suivants :
- La colonne est de type numérique : la conversion effectuée se montre alors tolérante au format de saisie, par exemple en acceptant plusieurs séparateurs décimal : le point et la virgule par exemple. La conversion gère aussi les séparateurs de millier.
- La colonne est de type date : dans ce cas la conversion détecte des chaîne de date valide et considère comme valide 01/01/2000, 1/1/00, 20000101,...

En cas d'impossibilité de conversion alors l'invention n'enregistre rien et affiche une erreur relative à la donnée impossible à convertir. Par exemple la date 50/50/2010 n'est pas valide.

Lors de la production du modèle de saisie, le fichier JSON comporte des données valides dont les formats guident l'utilisateur dans ses saisies lors de l'édition du modèle.

La vérification des formats de toutes les valeurs constitue une étape de validation formelle. Cette étape est mise en oeuvre, par exemple, en associant, via un fichier de configuration, à chaque type une ou plusieurs expression régulière. Une valeur d'un type est valide si elle correspond à au moins une des expressions régulières associée au type de la colonne qu'elle doit alimenter.

## Revendications

1. Procédé d'enregistrement de données hiérarchisées, dans un système de stockage de données comportant au moins une entité de stockage **caractérisé en ce qu'**il comporte les étapes suivantes :
- Analyse (202) sémantique d'une commande saisie par un utilisateur pour déterminer une liste d'entités de stockage potentiellement concernée par l'enregistrement,
- Analyse (203) d'un schéma descriptif de la structure des entités de stockage pour compléter la liste d'entités de stockage,
- Production et enregistrement (204) dans une mémoire d'un modèle de saisie de données selon un formalisme JSON,
- Edition (205), par un utilisateur, du modèle de saisie,
- Interprétation (206) du modèle de saisie édité pour mettre à jour le système de stockage de données.

2. Procédé d'enregistrement selon la revendication 1, **caractérisé en ce que** l'analyse sémantique est réalisée en utilisant un fichier de configuration qui associe des mots clés à des identifiants d'éléments du schéma descriptif de la structure de stockage.

3. Procédé d'enregistrement selon l'une des revendications précédentes, **caractérisé en ce que**, lors de l'étape de production, les clés des paires [clé, valeur] du modèle de saisie sont produites à partir du schéma descriptif de la structure des entités de stockage et/ou à partir d'un fichier de configuration.

4. Procédé d'enregistrement selon l'une des revendications précédentes, **caractérisé en ce que** le seul type primitif JSON utilisé est la chaîne de caractère.

5. Procédé d'enregistrement selon l'une des revendications précédentes, **caractérisé en ce que**, lors de l'enregistrement du modèle de saisie, chaque objet JSON commence sur une nouvelle ligne, chaque nouvelle ligne étant indentée d'une quantité dépendant d'une profondeur de l'objet JSON dans la hiérarchie d'objets JSON de la chaîne JSON.

6. Procédé d'enregistrement selon l'une des revendications précédentes, **caractérisé en ce que**, lors de l'enregistrement du modèle de saisie, chaque propriété d'un objet JSON commence sur une nouvelle ligne, chaque nouvelle ligne étant indentée d'une quantité dépendant d'une profondeur de l'objet JSON dans la hiérarchie d'objets JSON de la chaîne JSON.

7. Procédé d'enregistrement selon l'une des revendications précédentes, **caractérisé en ce que**, lors de l'interprétation du modèle saisie édité :
- Une accolade ouvrante est interprétée comme une instruction de création,
- Une valeur, d'une paire [clé, valeur] JSON, est soit une valeur d'une propriété, soit une désignation d'un objet existant du système de stockage.

8. Procédé d'enregistrement selon l'une des revendications précédentes, **caractérisé en ce que** l'étape d'interprétation comporte une étape de validation formelle des valeurs, l'échec de la validation entrainant l'interruption de l'étape d'interprétation.

9. Un dispositif de stockage numérique stockant un programme exécutable par une machine et composé d'instructions réalisant le procédé selon l'une des revendications précédentes.
